# EUROPÄISCHE PATENTSCHRIFT

(11) **EP 3 667 118 B1**
(45) Veröffentlichungstag und Bekanntmachung des Hinweises auf die Patenterteilung: **30.12.2020**
(21) Anmeldenummer: 18212569.0
(22) Anmeldetag: 14.12.2018
(51) Int. Cl.: F16G 3/10, A01F 15/18

(54) **RIEMEN ALS ENDLOSES ZUGMITTEL SOWIE VERFAHREN ZUM HERSTELLEN EINES SOLCHEN RIEMENS**
BELT AS ENDLESS TRACTION MECHANISM AND METHOD FOR MANUFACTURING SUCH A BELT
COURROIE EN TANT QUE MOYEN DE TRACTION SANS FIN AINSI QUE PROCÉDÉ DE FABRICATION D'UNE TELLE COURROIE

(43) Veröffentlichungstag der Anmeldung: 17.06.2020
(73) Patentinhaber: Arnold Jäger Holding GmbH, 30625 Hannover (DE)
(72) Erfinder: Jäger, Sebastian, 30657 Hannover (DE); Schmidt, Nick, 31275 Lehrte/Immensen (DE)
(74) Vertreter: Bremer, Ulrich

(56) Entgegenhaltungen:
- EP-A2- 1 134 451
- DE-A1-102011 116 633
- US-A- 1 635 185
- US-A1- 2008 153 647

## Beschreibung

Die vorliegende Erfindung betrifft einen Riemen als endloses Zugmittel, insbesondere für Förderbänder landwirtschaftlicher Maschinen, insbesondere Ballenpressen, gemäß dem Oberbegriff des Anspruchs 1. Die Erfindung betrifft weiterhin ein Verfahren zum Herstellen eines solchen Riemens.

Ein derartiger Riemen ist in der DE 10 2004 023 705 B3 offenbart, die eine Maschine zum Aufnehmen und Pressen von landwirtschaftlichem Erntegut, z. B. Heu oder Stroh betrifft. Diese Maschine ist mit einem Ballenförderer ausgestattet, der zwei parallel zueinander beabstandeten Riemen aufweist, die durch voneinander parallel beabstandete Querstäbe miteinander verbunden sind. Die Riemen bestehen aus einem Kunststoffmaterial oder aus Gummi und sind durch mindestens eine Gewebelage verstärkt.

In der US 2008/0153647 A1 ist ein endloser Riemen aus elastomerem Material beschrieben. Er kommt ebenfalls in Ballenpressen zum Einsatz und ist durch einen Wickel aus Stahlkord verstärkt, der in Längsrichtung des Riemens verläuft und in eine Gummi-Matrix eingebettet ist. Zusätzlich zu diesem Wickel ist eine weitere Stahlkordverstärkung vorgesehen, die quer zur Riemenlängsrichtung ausgerichtet ist. Diese Riemen sind in der Ballenpresse mehrfach nebeneinander angeordnet und wirken direkt auf das zu Ballen zu formende Erntegut ein.

Die Riemen müssen für ihren Einsatz in endloser Form vorliegen. Zur Herstellung einer derartigen endlosen Form sind aus dem Stand der Technik verschiedene Vorgehensweisen bekannt.

So ist es aus DE 100 37 645 A1 bekannt, die beiden Enden des Riemens kammerartig zu verzahnen und die Verzahnungsbereiche zum Endlosmachen des Riemens ineinanderzuschieben und nach zu vulkanisieren. Gemäß DE 3 808 711 A1 ist vorgesehen, dass an den beiden Riemenenden metallische Armaturen befestigt sind, die im Wesentlichen u-förmig gestaltet und wechselseitig an den Riemenenden angeordnet sind. Die Schenkel der Armaturen schließen die Riemenende mit Pressung zwischen sich ein und sind durch Niete, die die Riemenenden durchsetzen befestigt. Die die Schenkel verbindenden etwa halbkreisförmigen Stege der Armaturen liegen wechselseitig an einem Stab an, der sich über die gesamte Breite der Riemenenden erstreckt und nach der Montage des Bandes eingeführt ist und zum Zwecke der Demontage des Bandes herausgezogen werden muss. Der Stab besteht aus einem geeigneten Metall, er kann aber auch als starkes Drahtseil ausgebildet sein. Nachteilig hierbei ist, dass sich die Armaturen im Bereich der halbreisförmigen Stege durch Reibung mit dem Stab im Betrieb des Riemens mit der Zeit abnutzen und der Riemen daher getauscht werden muss.

In der EP 3 078 880 A1 erfolgt das Endlosmachen eines als Nockenriemen ausgeführten Zugmittels durch ein Riemenschloss. Derartige Riemenschlösser werden in verschiedenen Ausführungsformen häufig zum Endlosmachen von Zugmitteln für Förderbänder von landwirtschaftlichen Maschinen eingesetzt.

In der DE 10 2011 116 633 A1 ist weiterhin ein aus einem gewebelagenverstärkten Polymer hergestellter Flachriemen als Zugmittel bekannt. Das Endlosmachen dieses Riemens erfolgt dadurch, dass er an beiden Enden über die gesamte Breite mehrfach abgestuft ist. Dadurch ergibt sich ein Überlappungsbereich, in dem ein erster Endbereich des Riemens und ein zweiter Endbereich des Riemens überlappend aufeinander liegen. Der Riemen besitzt auf seiner Unterseite in gleichmäßigen Abständen angeordnete, sich quer zur Längsrichtung erstreckenden Nuten, die im Überlappungsbereich der Aufnahme von Ankerplatten dienen. Jede Ankerplatte weist zwei angeschweißte und voneinander beabstandete Schraubenbolzen auf. Bei aufeinandergelegten Riemenenden durchragen diese Schraubenbolzen in den Riemenenden vorgesehene, miteinander fluchtende Löcher. Auf die aus dem Riemen herausragenden Enden der Schraubenbolzen werden Muttern aufgedreht und fest angezogen, wodurch die Riemenenden zur Übertragung von Zugkräften fest aneinandergepresst werden.

Nachteilig bei diesen Riemenverbindungen ist, dass sie aufwendig auszubilden sind und im Betrieb störende Geräusche dadurch verursachen können, dass metallische Bestandteile im Bereich der Riemenverbindung auf andere Bauteile, z.B. Zahnräder oder Rollen oder dgl., aufschlagen.

Weitere Riemen als endloses Zugmittel mit einer genähten Verbindung sind beispielsweise in US 1,635 185 A oder EP 1 134 451 A2 gezeigt.

Aufgabe der vorliegenden Erfindung ist daher, einen gattungsgemäßen Riemen zur Verfügung zu stellen, der eine sehr große Zugfestigkeit aufweist, einfach zu fertigen ist und eine minimierte Geräuschentwicklung im Betrieb gewährleisten kann. Aufgabe ist weiterhin, ein Verfahren zum Herstellen eines solchen Riemens anzugeben.

Diese Aufgabe wird erfindungsgemäß mit einem Riemen gelöst, der die Merkmale des Anspruchs 1 aufweist, sowie mit einem Herstellungsverfahren nach dem weiteren unabhängigen Anspruch. Die Unteransprüche beschreiben bevorzugte Weiterbildungen.

Ein erfindungsgemäßer Riemen als endloses Zugmittel wird demnach in eine endlose Form gebracht, indem die in einem Überlappungsbereich übereinandergelegten Endbereiche durch mindestens einen eine Naht ausbildenden Faden miteinander verbunden sind, wobei der mindestens eine Faden die Endbereiche des Riemens dazu in einem Nahtbereich in mehreren Stichen durchdringt, wobei die mindestens eine Gebewebelage des Riemens zumindest über diesen Nahtbereich in die Polymerschicht eingebettet ist, und der Faden in Übergangsbereichen zwischen den Stichen in die Polymerschicht derartig oberflächlich in einer Eindringtiefe eingebettet ist, dass der Faden im Wesentlichen vollständig unterhalb von Oberflächen des Riemens verläuft bzw. nicht darüber hinaus aus dem Riemen ragt.

Es ist seit langem bekannt, Riemen aus vorzugsweise vernetztem Polymer, insbesondere Gummi, mit eingebetteten Gewebelagen in den Endbereichen miteinander zu verbinden, um einen endlosen Riemen zu erhalten. Diese Verbindung über einen zusätzlichen Faden bzw. eine Naht herzustellen, ist aufgrund der hohen Belastungen im Betrieb des Riemens, z.B. an einem Förderband landwirtschaftlicher Maschinen, bisher nicht umgesetzt worden. Der eingenähte Faden ragt nämlich bei einer solchen Vernähung herkömmlicherweise über die Oberfläche des Riemens aus dem polymeren Obermaterial hinaus, so dass der Faden durch die hohen auftretenden Kräfte insbesondere im Überlappungsbereich bzw. Nahtbereich stark beeinträchtigt wird, wodurch sich die Riemenverbindung nach kurzer Zeit wieder öffnet.

Aufgrund der erfindungsgemäßen Ausbildung der Naht tritt dieses Problem nicht mehr oder erst sehr viel später auf, da der die Endbereiche miteinander verbindende Faden vorzugsweise vollständig in das polymere Obermaterial des Riemens, z.B. in die Gummischicht, eingebettet ist. Demnach liegt der Riemen lediglich mit seiner Oberfläche auf z.B. Umlenkrollen oder Antriebsrollen oder bei einer Ballenpresse auf dem geförderten Erntegut auf, so dass eine Wechselwirkung zwischen diesen bzw. diesem und dem Faden vorteilhafterweise vermieden werden kann, da der Faden durch das polymere Obermaterial, in das er eingebettet ist, geschützt ist. Auf die Oberfläche des Riemens wirkende Kräfte pflanzen sich somit, wenn überhaupt, nur sehr geringfügig auf den Faden fort, so dass der Faden selbst in seiner Funktion, dem Zusammenhalten der Endbereiche des Riemens und der Aufnahme von Zugbelastungen, nicht oder erst nach sehr langer Zeit beeinträchtigt wird. Die Dauerhaltbarkeit eines solchen endlosen Riemens wird dadurch stark verbessert.

Ein derartiger endloser Riemen kann hierbei insbesondere in Förderbändern landwirtschaftlicher Maschinen, insbesondere in Ballenpressen, eingesetzt werden. Es kommen aber auch andere Anwendungen mit endlosen Zugmitteln, die unter einer Zugbelastung betrieben werden, in Betracht.

Vorzugsweise ist dabei vorgesehen, dass der Riemen zumindest bereichsweise oberflächlich strukturiert ist, insbesondere in dem Nahtbereich und/oder in dem Überlappungsbereich, und demnach eine gewisse Rauigkeit bzw. Unebenheit aufweist, in die der Faden im Übergangsbereich eindringen kann. Aber auch eine darüberhinausgehende oberflächliche Strukturierung kann vorgesehen sein. Damit kann der Faden in den Übergangsbereichen zumindest teilweise bereits durch sein Eindringen in die Strukturierung oberflächlich eingebettet werden. Eine Fadenspannung oder andere Maßnahmen zum oberflächlichen Einbetten können demnach minimiert werden bzw. ganz entfallen. Durch eine im Betrieb des Riemens auf den Faden wirkende Zugspannung sorgt dann, wenn überhaupt, nur in einem geringen Maße für ein noch tieferes Eindringen des Fadens in die Polymerschicht, so dass der Faden weiterhin ausreichend gespannt bleibt und sich nicht zu sehr lockert.

Vorzugsweise ist die Oberfläche des Riemens dabei durch die Polymerschicht bzw. die Gummischicht als polymeres Obermaterial gebildet, die über den gesamten Riemen oder im Wesentlichen nur über den Nahtbereich ausgedehnt ist. Somit können der Aufbau und die Art der Polymerschicht neben dem Nahtbereich flexibel an die Anwendung angepasst werden, da das erfindungsgemäße Verbinden durch den Faden lediglich eine Polymerschicht im Nahtbereich benötigt, um den Faden darin einbetten zu können. Zusätzlich kann auch vorgesehen sein, dass die Oberflächen des Riemens zumindest im Nahtbereich von einer weiteren vulkanisierten Polymerschicht überdeckt sind. Dadurch kann der Faden vorteilhafterweise zusätzlich vor oberflächlichen Belastungen auf den Riemen geschützt werden.

Vorzugsweise ist der Faden in den Übergangsbereichen zwischen den Stichen also in einer von der Oberfläche in einer Eindringtiefe verlaufenden Vertiefung angeordnet, wobei die Vertiefung zumindest bereichsweise durch Aufbringen einer Fadenspannung auf den Faden, insbesondere in einem Nähvorgang und/oder im Betrieb des Riemens, einbringbar ist. Dadurch sind keine zusätzlichen Maßnahmen für die Einbettung nötig und die Einbettung kann allein durch den entsprechend gesteuerten Nähvorgang und/oder durch Betreiben des Riemens ausgebildet werden. Das Material der Polymerschicht ist dazu entsprechend nicht zu hart zu wählen. Die Fadenspannung zum Ausbilden der Vertiefung ist dabei reduziert, wenn bereits eine strukturierte Oberfläche vorliegt. Weiterhin kann aber auch vorgesehen sein, dass die Vertiefung bereits vorab z.B. in Form einer Nut bzw. eines eingebrachten Profils in den Oberflächen ausgebildet ist und der Faden entlang dieser vorab eingebrachten Vertiefung eingenäht wird. Alternativ kann vorgesehen sein, dass der Faden in den Übergangsbereichen zwischen den Stichen unter der Oberfläche des Riemens in der Eindringtiefe vollständig von der Polymerschicht bedeckt ist. Dies kann beispielsweise dadurch erfolgen, dass die Polymerschicht nach dem Vernähen erst aufgebracht wird.

Vorzugsweise ist weiterhin vorgesehen, dass zwischen der Gewebelage und den Übergangsbereichen des Fadens zumindest ein Teil der Polymerschicht oder eine andere polymere Beschichtung angeordnet ist. Demnach ist der Faden vorzugsweise nicht so tief in die Polymerschicht eingebettet, dass der Faden auf dem Gewebe flächig aufliegt. Dadurch kann sich der gegenüber dem Gewebe verschiebliche Faden im Betrieb des Riemens nicht an dem Gewebe abreiben und dadurch reißen.

Gemäß einer bevorzugten Weiterbildung ist vorgesehen, dass ein Großteil der Übergangsbereiche, vorzugsweise alle Übergangsbereiche, zwischen den Stichen eine Richtungs-Komponente aufweist, die parallel zu einer Längsrichtung des Riemens ausgerichtet ist. Dadurch kann erreicht werden, dass eine Zugbelastung auf den Riemen durch den Faden effizient abgeleitet werden kann. Die Zugbelastung und ggf. weitere Kräfte werden von dem Faden vorzugsweise in die Gewebelage abgeführt, die durch die Stiche in mehreren Kreuzungspunkten von dem Faden durchstoßen wird. Dadurch kann eine besonders hohe Zugfestigkeit des endlos verbundenen Riemens mit einer hohen Haltbarkeit der Riemenverbindung gewährleistet werden.

Vorzugsweise ist dabei vorgesehen, dass ein Winkel zwischen der Längsrichtung des Riemens und einem Großteil der Übergangsbereiche, vorzugsweise allen Übergangsbereichen, zwischen 5° und 60°, vorzugsweise zwischen 5° und 45° beträgt, so dass ein besonders effizientes Abführen der Zugbelastung ermöglicht wird, da die Richtungs-Komponente, die parallel zur Längsrichtung verläuft, überwiegt. Dies kann bevorzugt dadurch erreicht werden, dass die durch den mindestens einen Faden ausgebildete Naht einen Zickzack-Verlauf und/oder einen wellenförmigen Verlauf und/oder einen Rechteck-Verlauf oder Kombinationen davon aufweisen.

Erfindungsgemäß ist weiterhin eine Haltenaht vorgesehen, die im Nahtbereich im Wesentlichen quer zur Längsrichtung des Riemens verläuft, wobei die Hauptrichtungskomponente der Haltenaht vorzugsweise in einem Winkel von mehr als 45° zur Längsrichtung des Riemens, vorzugsweise in etwa 60° zur Längsrichtung des Riemens, verläuft. Diese dient vorteilhafterweise dazu, die Riemenenden an die Oberfläche des Riemens zu drücken, um ein Umknicken der Endbereiche ausgehend von den Riemenenden zu unterdrücken. Dadurch kann sich ein dauerhaft konstanter Lauf des Riemens einstellen und ein Aufreißen der Riemenverbindung durch ein Umknicken der Endbereiche kann vermieden bzw. hinausgezögert werden.

Dies kann ergänzend oder alternativ auch dadurch erreicht werden, dass der Nahtbereich zumindest einseitig bzw. bereichsweise über den Überlappungsbereich hinausgeht, so dass auch Stiche und Übergangsbereiche außerhalb des Überlappungsbereiches angeordnet sind. Somit ist die Naht lediglich über den Überlappungsbereich hinweg zu führen, was das Andrücken der Riemenenden vereinfacht, da keine weitere Naht nötig ist.

Vorzugsweise kann weiterhin vorgesehen sein, dass die Gewebelage eine Doppeltuch-Struktur aufweist und/oder die Gewebelage als SZ-Gewebe ausgeführt ist, wobei die Gewebelage in Kreuzungspunkten von dem Faden durchstoßen wird. Demnach ist der eingenähte Faden zunächst nicht dem Gewebe zugeordnet, sondern wird nachträglich eingebracht, um die Endebereiche miteinander zu verbinden. Die Doppeltuch-Struktur weist an sich bereits eine besonders hohe Zugfestigkeit auf, so dass die über den Faden abgeleitete Zugbelastung im Bereich der Riemenverbindung ebenfalls besonders effizient abgeleitet werden kann, was die Zugfestigkeit und die Dauerhaltbarkeit des endlosen Riemens insgesamt verbessert. Weiterhin verlaufen Schussfäden in dieser Struktur paarweise übereinander, so dass der die Gewebelage durchstoßende Faden je Seite von zwei Schussfäden umspannt ist, wodurch die Ausreißfestigkeit des Fadens erhöht wird. Dadurch verbessert sich die Zugfestigkeit des Riemens auch über die Riemenverbindung. Ein SZ-Gewebe ist beispielhaft in EP 0 213 219 A1 beschrieben. Durch dieses kann bereits eine sehr hohe Zugfestigkeit des Riemens gewährleistet werden und gleichzeitig auch eine gute Einleitung der Zugkräfte vom Faden in die Gewebelage. Weiterhin kann durch das SZ-Gewebe auch ein verbesserter Geradeauslauf des Riemens gewährleistet werden.

Vorzugsweise ist weiterhin vorgesehen, dass zwischen den Endbereichen des Riemens zusätzlich eine stoffschlüssige Verbindung ausgebildet ist. Damit kann die Dauerhaltbarkeit der Riemenverbindung zusätzlich gesichert werden. Zudem kann darüber zumindest ein Teil der wirkenden Zugbelastung zwischen den Endbereichen übertragen werden, so dass die Verbindung über den Faden zumindest anteilig entlastet werden kann. Vorzugsweise kann diese stoffschlüssige Verbindung auch dadurch ausgebildet werden, dass zunächst eine unvernetzte Polymerschicht zwischen den Endbereichen auf den sich normalerweise berührenden inneren Oberflächen angeordnet wird, die vor oder nach dem Vernähen vernetzt bzw. vulkanisiert wird. Grundsätzlich kann aber auch vorgesehen sein, dass diese unvernetzte Polymerschicht zwischen den Endbereichen nicht vulkanisiert wird und dadurch im vernähten Zustand lediglich als Schutzschicht zwischen den Endbereichen wirkt.

Weiterhin kann vorgesehen sein, dass die Endbereiche des Riemens gegensätzlich abgestuft sind zum Minimieren eines Überstandes zwischen den Endbereichen, wobei dazu eine innen liegende äußere Decklage der Polymerschicht im jeweiligen Endbereich unter Ausbildung jeweils einer Stufe zumindest teilweise abgetragen ist, beispielsweise durch Abziehen der innen liegenden äußeren Decklage der Polymerschicht, und die gegensätzlich abgestuften Endbereiche im Überlappungsbereich flächig aufeinanderliegen, um den endlosen Riemen auszubilden. Dadurch können der Lauf des Riemens sowie dessen Dauerhaltbarkeit weiter verbessert werden. Ergänzend kann auch vorgesehen sein, die jeweils außen liegende äußere Decklage der Polymerschicht zumindest im jeweiligen Endbereich bzw. Nahtbereich vor dem Vernähen abzutragen und nach dem Vernähen der Endbereiche zumindest im Nahtbereich eine unvernetzte Polymerschicht aufzulegen, die die Naht vollständig abdeckt, und diese anschließend zu vernetzen bzw. zu vulkanisieren, so dass diese Bestandteil des Riemens wird, in die die Gewebeschicht zumindest bereichsweise eingebettet ist und in die der Faden dann erfindungsgemäß in der Eindringtiefe ebenfalls eingebettet ist. Dadurch kann die Einbettung des Fadens weiter verbessert werden.

Erfindungsgemäß sind in einem Verfahren zum Herstellen eines soeben beschriebenen Riemens mindestens die folgenden Schritte vorgesehen:
- Bereitstellen eines offenen Riemens mit mindestens einer Gewebelage, die zumindest bereichsweise in eine Polymerschicht eingebettet ist;
- flächiges Aufeinanderlegen von Endbereichen des Riemens derartig, dass sich die Endbereiche in einem Überlappungsbereich überlappen;
- Verbinden der Endbereiche des Riemens zum Ausbilden eines endlosen Riemens, wobei vorgesehen ist, dass die Endbereiche des Riemens durch mindestens einen Faden miteinander verbunden werden, wobei der mindestens eine Faden dazu in einem Nahtbereich unter Ausbildung einer Naht in mehreren Stichen durch die Endbereiche des Riemens gestoßen wird, wobei die mindestens eine Gebewebelage des Riemens zumindest nach dem Ausbilden der Naht zumindest über diesen Nahtbereich in die Polymerschicht eingebettet ist, so dass der Faden beim oder zumindest nach dem Verbinden bzw. dem Ausbilden der Naht in Übergangsbereichen zwischen den Stichen in die Polymerschicht derartig oberflächlich in einer Eindringtiefe eingebettet wird, dass der Faden im Wesentlichen vollständig unterhalb von Oberflächen des Riemens verläuft, und - Einbringen einer Haltenaht, die im Nahtbereich im Wesentlichen quer zu einer Längsrichtung des Riemens verläuft. Damit kann vorteilhafterweise ein einfacher Verfahrensablauf gewährleistet werden, um den erfindungsgemäßen Riemen herzustellen.

Vorzugsweise ist weiterhin vorgesehen, dass die Polymerschicht beim Bereitstellen des offenen Riemens bereits vernetzt ist oder die Polymerschicht nach dem Verbinden der Endbereiche mit dem Faden erst vernetzt wird. Durch das nachträgliche Vernetzen durch eine entsprechende Wärmebehandlung kann die Einbettung des Fadens zusätzlich verbessert werden.

Vorzugsweise ist weiterhin vorgesehen, dass der Riemen vor dem flächigen Aufeinanderlegen der Endbereiche in den Endbereichen abgestuft wird, beispielsweise durch Abziehen der innen liegenden äußeren Decklage der Polymerschicht. Dadurch können die Laufeigenschaften und die Dauerhaltbarkeit verbessert werden.

Vorzugsweise ist weiterhin vorgesehen, dass der Riemen vor dem Verbinden der Endbereiche mit dem Faden zumindest im Nahtbereich oberflächlich strukturiert wird. Dadurch kann das Einbetten des Fadens erleichtert werden, da weniger Fadenspannung zum Einbetten nötig ist und der Faden durch die Zugbelastung im Betrieb nachträglich weniger stark in die Polymerschicht gezogen wird und somit seine Spannung im Wesentlichen behält.

Vorzugsweise ist weiterhin vorgesehen, dass nach dem Ausbilden der Naht eine weitere, die Oberflächen des Riemens zumindest im Nahtbereich überdeckende Polymerschicht aufgebracht und vernetzt bzw. vulkanisiert wird. Dadurch kann der Faden vorteilhafterweise zusätzlich vor oberflächlichen Belastungen auf den Riemen geschützt werden. Vorzugsweise kann dazu vorgesehen sein, dass die jeweils außen liegende äußere Decklage der Polymerschicht des bereitgestellten Riemens zumindest im jeweiligen Endbereich bzw. im Nahtbereich vor dem Vernähen teilweise abgetragen wird und nach dem Vernähen der Endbereiche eine unvernetzte Polymerschicht zumindest im Nahtbereich wieder als außen liegende äußere Decklage aufgelegt wird, so dass die Naht vollständig davon abdeckt wird. Diese unvernetzte Polymerschicht wird nach dem Nähvorgang vernetzt bzw. vulkanisiert, so dass diese Bestandteil des Riemens wird und die Gewebelage somit bereichsweise einbettet und der Faden darin ebenfalls eingebettet ist. Demnach ist der Faden bei dieser Methode erst nach dem Vernähen in die Polymerschicht des Riemens eingebettet. Dadurch kann die Einbettung des Fadens weiter verbessert werden, ohne dass der Riemen dabei im Nahtbereich dicker wird.

Die Erfindung wird nachstehend anhand eines Ausführungsbeispiels näher erläutert. In der dazu gehörigen Zeichnung zeigt:
- Fig. 1: zeigt einen Längsschnitt durch einen erfindungsgemäßen Riemen;
- Fig. 2, 2a, 2b, 2c: Detailansichten des Riemens gemäß Fig. 1;
- Fig. 3a, b, c: Detailansichten eines Nahtbereiches des Riemens gemäß Fig. 1; und
- Fig. 4: ein Flussdiagramm zur Durchführung des Verfahrens.

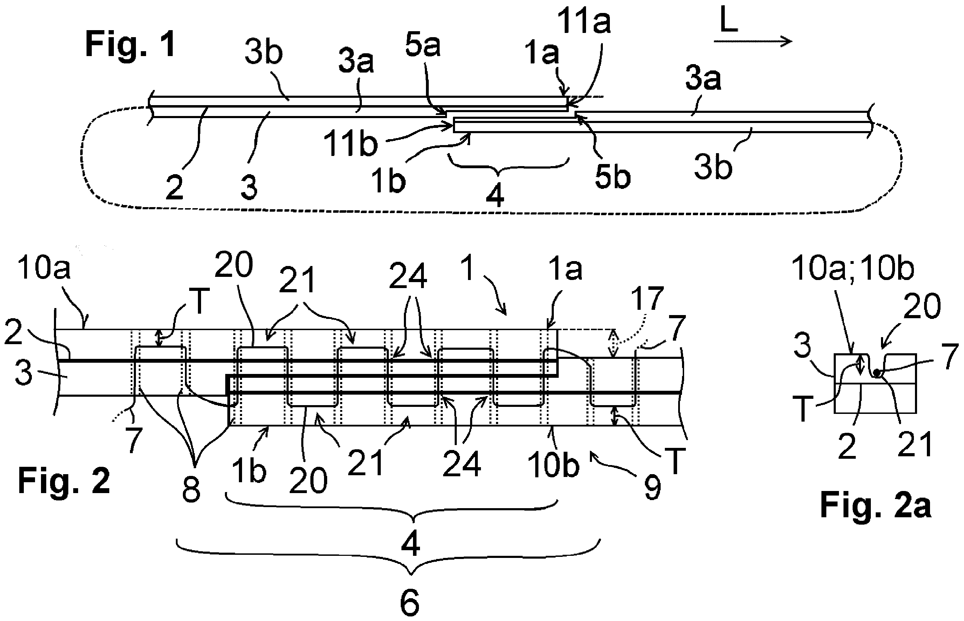

Der in Fig. 1 dargestellte Riemen 1 kann als Zugmittel für Förderbänder landwirtschaftlicher Maschinen, insbesondere in einer Ballenformeinrichtung einer Ballenpresse, eingesetzt werden und läuft dabei in dieser auf mehreren Umlenkrollen und einer Antriebsrolle um (nicht dargestellt). Der Riemen 1 kann aber auch in anderen Bereichen zum Einsatz kommen und dabei auch andere Ausbildungen als gezeigt aufweisen, wie aus der folgenden Beschreibung hervorgeht.

Der Riemen 1 ist dazu in seinen Endbereichen 1a, 1b zusammengefügt, um einen endlosen Riemen 1 auszubilden, der z.B. auf die Rollen einer Fördereinrichtung einer landwirtschaftlichen Maschine aufgespannt werden kann. Der Riemen 1 besteht zumindest bereichsweise aus einem gewebelagenverstärkten, vernetzten Polymer und besitzt demnach mindestens eine verstärkende Gewebelage 2, die zumindest bereichsweise in eine Polymerschicht 3, insbesondere Gummischicht, eingebettet ist, so dass die Gewebelage 2 zumindest bereichsweise von oben und unten von der Polymerschicht 3 als polymeres Obermaterial bedeckt ist. Unter Umständen können als polymeres Obermaterial auch andere oder zusätzliche polymere Schichten und/oder polymere Beschichtungen vorgesehen sein.

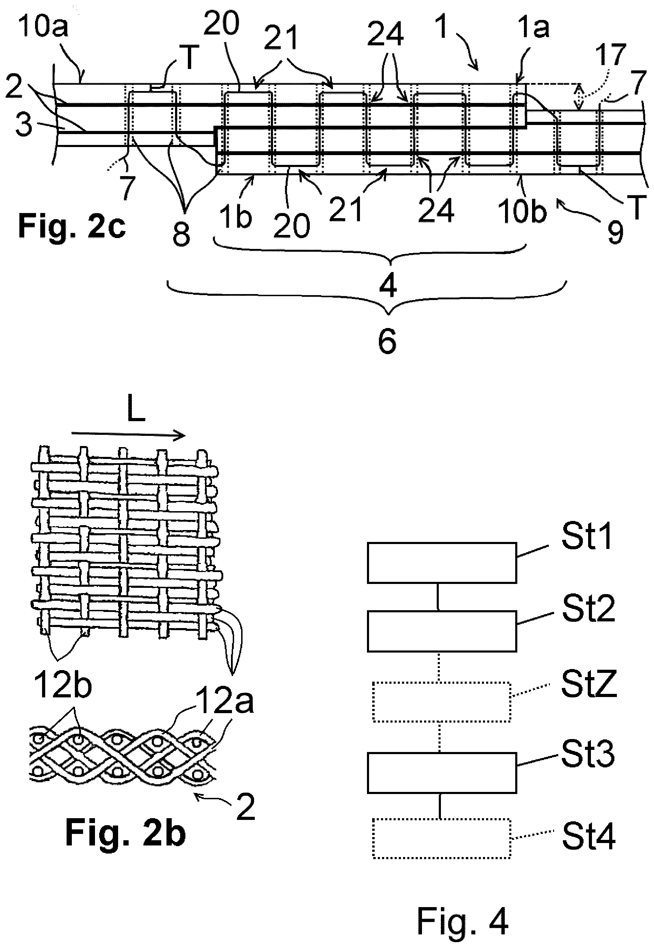

Zum Ausbilden des endlosen Riemens 1 ist zunächst vorgesehen, die Endbereiche 1a, 1b des Riemens 1 in einem Überlappungsbereich 4 flächig übereinander zu legen. Gemäß Fig. 1 sind die Endbereiche 1a, 1b dabei gegensätzlich abgestuft, wobei dazu die innen liegende äußere Decklage 3a der Polymerschicht 3 in beiden Endbereichen 1a, 1b unter Ausbildung jeweils einer Stufe 5a, 5b zumindest teilweise abgetragen wird. Durch diese Maßnahme kann ein Überstand 17 (s. Fig. 2, 2c) im Überlappungsbereich 4 verringert werden, was den Lauf des Riemens 1 sowie dessen Dauerhaltbarkeit verbessert. Grundsätzlich kann aber auch eine stufenlose Überlappung vorgesehen sein. Ergänzend kann das Ausbilden einer flächigen stoffschlüssigen Verbindung im Bereich der Stufen 5a, 5b zwischen den Endbereichen 1a, 1b über ein beliebiges Klebemittel oder eine zwischen den Endbereichen 1a, 1b angeordnete unvulkanisierte Polymerschicht, die nach dem Vernähen vernetzt wird, vorgesehen sein. Je nach Anwendung kann die zusätzliche zwischen den Endbereichen 1a, 1b angeordnete unvulkanisierte Polymerschicht auch unvernetzt bleiben.

Gemäß Fig. 2 werden die übereinandergelegten Endbereiche 1a, 1b des Riemens 1 anschließend in einem Nahtbereich 6 mit mindestens einem Faden 7 zusammengenäht, wobei der Faden 7 dazu insbesondere die beiden Endbereiche 1a, 1b in mehreren Stichen 8 durchdringt. Dadurch wird pro Faden 7 eine Naht 9 mit einer bestimmten Nahtform ausgebildet, wobei Fig. 2 eine beispielhafte Schnittansicht entlang einer solchen Naht 9 zeigt. Fig. 2c zeigt ergänzend einen Schnitt durch einen Riemen 1 mit zwei eingebetteten Gewebelagen 2. Um einen derartig endlos verbundenen Riemen 1 dauerhaft unter einer hohen Zugbelastung betreiben zu können, wird der Faden 7 unter den folgenden Aspekten in den Nahtbereich 6 eingebracht:

Um im Betrieb des Riemens 1 zu verhindern, dass der Faden 7 durch eine dauerhafte Belastung, z.B. durch Andruck und/oder Reibung mit dem geförderten Erntegut sowie den Umlenkrollen bzw. der Antriebsrolle oder anderen anliegenden Komponenten (je nach Anwendung), abgenutzt wird und dadurch irgendwann reißt, ist der Faden 7 in Übergangsbereichen 20 zwischen den einzelnen Stichen 8 in die Polymerschicht 3 des jeweiligen Endbereiches 1a, 1b eingebettet, wie in Fig. 2, 2c schematisch dargestellt.

Unter eingebettet ist dabei zu verstehen, dass der Faden 7 auch in den Übergangsbereichen 20 zwischen den Stichen 8 vorzugsweise vollständig unterhalb der Oberflächen 10a, 10b der Polymerschicht 3 liegt bzw. nicht darüber hinaus aus dem Riemen 1 ragt. Der Faden 7 dringt somit mit einer gewissen Eindringtiefe T in den Riemen 1 bzw. dessen Oberfläche 10a, 10b ein. Dadurch kann gewährleistet werden, dass der Riemen 1 hauptsächlich mit seinen Oberflächen 10a, 10b auf den Rollen bzw. dem Erntegut bzw. der entsprechenden anwendungsspezifischen Komponente anliegt und der eingebettete Faden 7 je nach Eindringtiefe T in der Polymerschicht 3 nicht oder zumindest weniger stark belastet und somit geschützt wird.

Weist der Riemen 1 neben der Polymerschicht 3 oberflächlich weitere polymere Schichten und/oder polymere Beschichtungen auf, so ist der Faden 7 entsprechend in diese eingebettet, d.h. verläuft entsprechend in einer Eindringtiefe T unterhalb den Oberflächen dieser weiteren Schichten bzw. ragt nicht darüber aus dem Riemen 1 hinaus.

Das Einbetten des Fadens 7 in die Oberflächen 10a, 10b des Riemens 1 wird durch die oberflächlich zumindest im Nahtbereich 6 ausgebildete Polymerschicht 3 begünstigt, wobei die Polymerschicht 3 nicht zu hart sein sollte, damit der Faden 7 in diese eintauchen kann. Gleichzeitig darf die Polymerschicht 3 aber auch nicht zu weich sein, damit auf den Riemen 1 wirkende Kräfte nicht oder nur sehr gedämpft auf den Faden 7 übertragen werden und sich die Polymerschicht 3 im Betrieb auch nicht zu schnell abnutzt und den Faden 7 dadurch freilegt. Dazu sollte auch die Dicke der Polymerschicht 3 im Nahtbereich 6 zumindest 1mm betragen.

Grundsätzlich ist es für das Ausbilden des endlosen Riemens 1 mit der erfindungsgemäß eingebetteten Naht 9 ausreichend, dass die soeben beschriebene Polymerschicht 3 lediglich im Nahtbereich 6 vorhanden ist, um für den Schutz des Fadens 7 zu sorgen. Die Art der polymeren Einbettung bzw. Polymerbeschichtung bzw. Gummierung der Gewebelage 2 neben dem Nahtbereich 6 kann individuell an die jeweilige Anwendung angepasst werden. So kann der Riemen 1 vollumfänglich mit derselben Polymerschicht 3 ausgebildet sein oder die Polymerschicht 3 neben dem Nahtbereich 6 kann eine andere Zusammensetzung und/oder Dicke aufweisen. Unter Umständen kann das Obermaterial bzw. die Polymerschicht 3 neben dem Nahtbereich 6 auch ganz entfallen, so dass die Gebewebelage 2 freiliegt.

Die Einbettung des Fadens 7 in die Polymerschicht 3 im Nahtbereich 6 kann beispielsweise dadurch erreicht werden, dass beim Ausbilden der Naht 9 in einem Nähvorgang eine gewisse Fadenspannung aufgebracht wird, so dass der Faden 7 in den Übergangsbereichen 20 zwischen den Stichen 8 in das polymere Material der Polymerschicht 3 eingedrückt wird (s. Fig. 2a) und dieses damit derartig verformt, dass sich eine Vertiefung 21 mit der Eindringtiefe T ausbildet. Dies kann im Betrieb des Riemens 1 auch noch verstärkt werden, wenn eine Zugspannung auf den Riemen 1 wirkt, durch die auch die Fadenspannung des Fadens 7 steigt. Dadurch wird der Faden 7 unter Verformung der Polymerschicht 3 noch tiefer in das polymere Material gezogen; die Eindringtiefe T steigt somit.

Der Faden 7 nähert sich damit immer mehr an die Gewebelage 2 an, ohne diese aber zu berühren, wodurch der Faden 7 noch besser geschützt werden kann. Da zwischen der Gewebelage 2 und dem Faden 7 auch immer noch das elastische polymere Material vorhanden ist, kann im Betrieb des Riemens 1 auch eine gewisse Schockelastizität erzielt werden, da der Faden 7 bei ruckartiger Zugbelastung auf den Riemen 1 in das elastisch nachgiebige polymere Material gedrückt wird. Dadurch wird der Ruck auf den Faden 7 gedämpft, wodurch dieser vor einem Reißen geschützt wird.

Um das Eindringen in die Polymerschicht 3 weiter zu vereinfachen, kann vorgesehen sein, dass die Oberflächen 10a, 10b der Polymerschicht 3 zumindest im Nahtbereich 6 strukturiert sind bzw. eine gewisse Rauigkeit und demnach bereits kleine Unebenheiten aufweisen. Dabei ist es ausreichend, die Polymerschicht 3 lediglich im Nahtbereich 6 zu strukturieren. Dadurch kann der Faden 7 auch bereits mit einer geringeren Kraft bzw. einer geringeren Fadenspannung in die Polymerschicht 3 eintauchen, da die Vertiefung 21 dann teilweise durch die bereits vorhandenen Unebenheiten mit ausgebildet wird. Ergänzend wird der Faden 7 im Betrieb des Riemens 1 bei gleicher Zugspannung auf den Riemen 1 nachträglich weniger stark in die Polymerschicht 3 gezogen als bei unstrukturierten Oberflächen 10a, 10b. Dadurch kann ein nachträgliches Lockern des Fadens 7 vermieden werden. Es kann grundsätzlich auch vorgesehen sein, die Vertiefung 21 bereits vorab durch Einbringen eines entsprechenden Profils in die Oberflächen 10a, 10b auszubilden, entlang derer dann die Naht 9 ausgebildet wird.

Alternativ kann auch vorgesehen sein, den Faden 7 erst nach dem Vernähen endgültig in die Polymerschicht 3 einzubetten. Dazu kann beispielsweise vorgesehen sein, dass die jeweils außen liegende äußere Decklage 3b der Polymerschicht 3 eines bereitgestellten Riemens 1 zumindest im jeweiligen Endbereich 1a, 1b bzw. im Nahtbereich 6 vor dem Vernähen teilweise abgetragen wird und nach dem Vernähen der Endbereiche 1a, 1b eine unvernetzte Polymerschicht zumindest im Nahtbereich 6 wieder als außen liegende äußere Decklage 3b aufgelegt wird, so dass die Naht vollständig davon abdeckt wird. Diese unvernetzte Polymerschicht wird nach dem Nähvorgang vernetzt bzw. vulkanisiert, so dass diese Bestandteil des Riemens 1 wird und die Gewebelage 2 somit bereichsweise einbettet und der Faden 7 darin ebenfalls eingebettet ist. Demnach ist der Faden 7 bei dieser Methode erst nach dem Vernähen in die Polymerschicht 3 des Riemens 1 eingebettet.

Durch die beschriebenen Methoden des Einbettens des Fadens 7 in die Polymerschicht 3 kann der Faden 7 also geschützt werden. Dadurch wird verhindert, dass sich der Faden 7 im dauerhaften Betrieb des Riemens 1 zu schnell abnutzt bzw. einzelne Bereiche des Fadens 7 durch die von den Rollen bzw. dem Erntegut bzw. der jeweiligen anliegenden anwendungsspezifischen Komponente ausgehenden Belastung, insbesondere Reibung, reißen und sich der endlose Riemen 1 im Bereich der Riemenverbindung durch die Belastung nach der Zeit wieder öffnet.

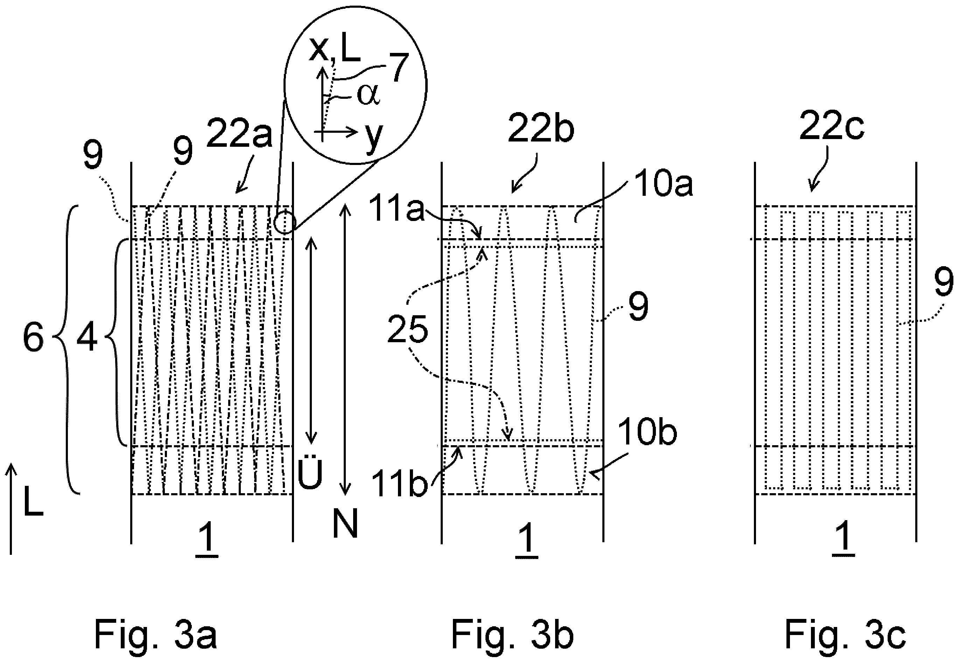

Statt lediglich einen eingebetteten Faden 7 zu verwenden, können auch zwei oder mehrere eingebettete Fäden 7 eingesetzt werden, die dann jeweils eine Naht 9 gemäß der obigen Beschreibung ausbilden. Die mehreren Nähte 9 können gemäß der Draufsicht in Fig. 3a beispielsweise jeweils einen Zickzack-Verlauf 22a als Nahtform aufweisen und sich auch schneiden, wobei die mehreren Nähe 9 derartig über die Breite des Riemens 1 versetzt zueinander in den Nahtbereich 6 eingebracht sind, dass ein Rautenmuster aus zwei Zickzack-Verläufen 22a ausgebildet wird.

Um im Betrieb eine hohe Zugfestigkeit des Riemens 1 auch mit dieser Riemenverbindung zu gewährleisten, ist jede Naht 9 derartig ausgeführt, dass der Faden 7 im Übergangsbereich 20 zwischen den Stichen 8 eine Richtungs-Komponente x in bzw. parallel zu einer Längsrichtung L des endlosen Riemens 1 aufweist. Dadurch ist der Faden 7 in den Übergangsbereichen 20 zumindest anteilig in die Haupt-Belastungsrichtung des Riemens 1, vorzugsweise in eine Zugbelastungsrichtung, ausgerichtet, so dass ein Großteil der Zugkraft im Bereich der Riemenverbindung von dem darin eingebetteten Faden 7 abfangen werden kann.

Dies kann beispielsweise durch den beschriebenen Zickzack-Verlauf 22a gemäß Fig. 3a gewährleistet werden, bei dem die beiden Fäden 7 der beiden Nähte 9 in den jeweiligen Übergangsbereichen 20 um einen Winkel α von etwa +5° bzw. - 5° gegenüber der Längsrichtung L des Riemens 1 angewinkelt sind. Somit macht die Richtungs-Komponente x des Fadens 7, die parallel zur Längsrichtung L des Riemens 1 verläuft, bereits einen größeren Anteil aus als die Richtungs-Komponente y, die quer zur Längsrichtung L des Riemens 1 verläuft.

Der Winkel α kann dabei grundsätzlich zwischen 5° und 60° eingestellt werden. Vorzugsweise überwiegt allerdings die Richtungs-Komponente x des Fadens 7, die parallel zur Längsrichtung L des Riemens 1 verläuft, d.h. der Winkel α ist vorzugsweise kleiner als 45°. Es können aber auch ein wellenförmiger Verlauf 22b (s. Fig. 3b) oder ein Rechteck-Verlauf 22c (s. Fig. 3c) zur Anwendung kommen, mit denen eine Zugbelastung auf die Riemenverbindung ebenfalls effektiv abgefangen werden kann. Die verschiedenen Naht-Verläufe 22a, 22b, 22c können auch miteinander kombiniert werden.

Das Zusammenwirken der Einbettung des Fadens 7 in die Polymerschicht 3 und der anteiligen Ausrichtung des Fadens 7 bzw. der Naht 9 in die Längsrichtung L sorgen somit für eine besonders hohe Zugfestigkeit des Riemens 1 auch im Bereich der Riemenverbindung, die über eine lange Zeitdauer erhalten werden kann. Dazu kann insbesondere auch die Wahl des Gewebes in der Gewebelage 2 beitragen.

Die verstärkende Gewebelage 2 ist hierbei vorzugsweise als ein sogenanntes SZ-Gewebe aus verzwirnten Kettfäden 12a und Schussfäden 12b (s. Fig. 2b) ausgeführt, wobei ein solches SZ-Gewebe beispielhaft in EP 0 213 219 A1 beschrieben ist, deren Inhalt hiermit vollständig in die vorliegende Anmeldung aufgenommen wird. Ein derartiges SZ-Gewebe zeichnet sich dadurch aus, dass benachbarte jeweils verzwirnte Kettfäden 12a, die sich vorzugsweise in Längsrichtung L des Riemens 1 erstrecken, unterschiedliche Drehungsrichtungen der Verzwirnung aufweisen. Dadurch haben im Wesentlichen die halbe Anzahl der Kettfäden 12a die eine Drehungsrichtung, während die anderen, restlichen Kettfäden 12a die entgegengesetzte Drehungsrichtung aufweisen. Somit werden Kettfäden 12a benutzt, die bei ihrer Herstellung bzw. bei der Verzwirnung in unterschiedliche Richtungen verzwirnt werden, wobei für die Fäden zweckmäßigerweise gleichmäßige Drehungszahlen angewendet werden. Vorzugsweise können gegensätzlich verzwirnte Kettfäden 12a paarweise zusammengefasst werden und in Paaren von den Schussfäden 12b umfasst sein (in Fig. 2b nicht dargestellt), wodurch eine besonders günstige gegenseitige Ausgleichswirkung der benachbarten Kettfäden 12a eintreten kann, so dass bereits eine sehr hohe Zugfestigkeit des Riemens 1 gewährleistet werden kann. Weiterhin kann durch das SZ-Gewebe auch ein verbesserter Geradeauslauf des Riemens 1 gewährleistet werden.

Da der Faden 7 dieses SZ-Gewebe in mehreren Stichen 8 durchstößt, kann die Zugbelastung auf den Faden 7 auch effizient in die Gebewebelage 2 abgeführt werden, wodurch die Zugfestigkeit des Riemens 1 auch über die Riemenverbindung hoch gehalten werden kann. Dabei ist allerdings darauf zu achten, dass die Gebewebelage 2 durch die Stiche 8 nicht zu stark perforiert wird, d.h. der Stichabstand nicht zu gering ist, vorzugsweise größer als 2mm, und die Stichdichte nicht zu hoch gewählt wird, da sich sonst die Zugfestigkeit des Riemens 1 insgesamt stark reduziert.

Ergänzend kann dieses SZ-Gewebe gemäß Fig. 2b in einer Doppeltuch-Struktur ausgebildet werden, wobei die Schussfäden 12b in dieser Doppeltuch-Struktur paarweise übereinanderliegend (in Durchstoßrichtung der Stiche 8) angeordnet sind und die Kettfäden 12a wie in Fig. 2b dargestellt mit den Schussfäden 12b verkreuzt sind. Dadurch kann die Dichte der verzwirnten Fäden und somit die Zugfestigkeit des Riemens 1 an sich erhöht werden. Bei einer Kombination dieser Doppeltuch-Struktur mit dem oben beschriebenen SZ-Gewebe wird jeder dargestellte Kettfaden 12a durch zwei parallel verlaufende und gegensätzlich verzwirnte Kettfäden 12a ersetzt.

Durch die Ausbildung mit paarweise übereinanderliegenden Schussfäden 12b (Doppeltuch) kann neben der hohen Zugfestigkeit aber auch eine besonders hohe Ausreißfestigkeit des Fadens 7 erreicht werden. Der Faden 7 durchstößt (Stich 8) die verkreuzten Kettfäden 12a und Schussfäden 12b einer Gewebelage 2 nämlich im Nahtbereich 6 an mehreren Stellen in Kreuzungspunkten 24 (s. Fig. 2, 2c). Der Faden 7 wird somit pro Gewebelage 2 beidseitig in einem gewissen Bereich von den Kettfäden 12a und den Schussfäden 12b eingespannt. Dadurch werden auf den Faden 7 wirkende Zugbelastungen noch besser in die Gewebelage 2 abgeleitet. Da der Faden 7 gemäß Fig. 2, 2c im Überlappungsbereich 4 zwei Gewebelagen 2 (der beiden Endbereiche 1a, 1b) durchdringt, wird dieser Effekt noch verstärkt, so dass die Zugfestigkeit des gesamten Riemens 1 auch über die Riemenverbindung weiter verbessert werden kann.

Je nach Ausführung und Anwendungsbereich des Riemens 1 können eine Nahtlänge N des Nahtbereiches 6 und/oder eine Überlappungslänge Ü des Überlappungsbereiches 4 angepasst werden. Dabei kann auch vorgesehen sein, dass der Nahtbereich 6 größer ist als der Überlappungsbereich 4 und/oder zumindest einseitig über diesen hinausragt, wie in den Fig. 3a, 3b und 3c angedeutet. Demnach verlaufen die Nähte 9 auch noch in einem kleinen Bereich neben den Riemenenden 11a, 11b des Riemens 1. Die Riemenenden 11a, 11b werden in dem Fall durch die Naht 9 an die Oberflächen 10a, 10b der Polymerschicht 3 gedrückt, so dass ein Umknicken der Endbereiche 1a, 1b ausgehend von den Riemenenden 11a, 11b vorteilhafterweise unterdrückt werden kann. Dadurch kann sich ein dauerhaft konstanter Lauf des Riemens 1 einstellen und ein Aufreißen der Riemenverbindung durch ein Umknicken der Endbereiche 1a, 1b kann vermieden bzw. hinausgezögert werden.

Erfindungsgemäß kann auch eine Haltenaht 25 vorgesehen sein, die wie in Fig. 3a, 3b, 3c gezeigt quer zur Längsrichtung L verläuft und dazu dient, die Riemenenden 11a, 1b anzudrücken. Der Winkel der Haltenaht 25 gegenüber der Längsrichtung L liegt hierbei bei vorzugsweise zwischen 45° und 90°, vorzugsweise bei 60°.

Zum Ausbilden des endlosen Riemens 1 kann gemäß dem Flussdiagramm in Fig. 4 vorgesehen sein, in einem ersten Schritt St1 zunächst eine zumindest in den Endbereichen 1a, 1b mit einer Polymerschicht 3 bzw. Gummischicht überzogene Gewebelage 2 bereitzustellen. Die Polymerschicht 3 kann hierbei bereits vernetzt sein oder erst nachträglich durch eine Wärmebehandlung vernetzt werden. In den Endbereichen 1a, 1b kann die Polymerschicht 3 zumindest einseitig bereichsweise abgetragen sein, um die in Fig. 2, 2c dargestellte abgestufte Kontur zu erhalten. In einem zweiten Schritt St2 werden die Endbereiche 1a, 1b in einem Überlappungsbereich 4 flächig aufeinandergelegt. Optional kann in einem Zwischenschritt StZ noch eine Strukturierung der Oberflächen 10a, 10b der Polymerschicht 3 zumindest im späteren Nahtbereich 6 erfolgen, um die Einbettung des Fadens 7 im anschließenden dritten Schritt St3 zu erleichtern.

In dem dritten Schritt St3 wird die Vernähung der Endbereiche 1a, 1b im Nahtbereich 6 mit dem Faden 7 unter Ausbildung einer eingebetteten Naht 9 durchgeführt. Dabei kann bei einem vor dem Vernähen durchgeführten Abtragen der außen liegenden äußeren Decklage 3b der Polymerschicht 3 in diesem Schritt eine unvernetzte Polymerschicht als außen liegende äußere Decklage 3b auf die Naht 9 aufgebracht werden, um die Naht 9 vorzugsweise vollständig zu bedecken und zu schützen. Wurde der Vernetzungsvorgang der Polymerschicht 3 bisher noch nicht durchgeführt, so findet er in diesem vernähten Stadium in einem vierten Schritt St4 durch eine entsprechende Wärmebehandlung statt. Dadurch kann die eingebettete Naht 9 noch besser geschützt werden. Im anschließenden Betrieb des Riemens 1 kann sich die Eindringtiefe T des Fadens 7 durch die wirkenden Zugbelastung noch verändern.

### Bezugszeichenliste

- 1: Riemen
- 1a: erster Endbereich
- 1b: zweiter Endbereich
- 2: Gewebelage
- 3: Polymerschicht
- 3a: innen liegende äußere Decklage der Polymerschicht 3
- 3b: außen liegende äußere Decklage der Polymerschicht 3
- 4: Überlappungsbereich
- 5a, 5b: Stufe in den Endbereichen 1a, 1b
- 6: Nahtbereich
- 7: Faden
- 8: Stich
- 9: Naht
- 10a, 10b: Oberflächen der Polymerschicht 3
- 11a, 11b: Riemenenden
- 12a: Kettfaden
- 12b: Schussfaden
- 17: Überstand
- 20: Übergangsbereich
- 21: Vertiefung
- 22a: Zickzack-Verlauf der Naht 9
- 22b: wellenförmiger Verlauf der Naht 9
- 22c: Rechteck-Verlauf der Naht 9
- 24: Kreuzungspunkt zwischen Stich 8 und Gewebelage 2
- 25: Haltenaht
- L: Längsrichtung
- x, y: Richtungskomponente
- St1, St2, St3, St4, StZ: Schritte des Verfahrens

## Patentansprüche

1. Riemen (1) als endloses Zugmittel, insbesondere für Förderbänder landwirtschaftlicher Maschinen, insbesondere Ballenpressen, mit mindestens einer Gewebelage (2), die zumindest bereichsweise in eine Polymerschicht (3) eingebettet ist, wobei Endbereiche (1a, 1b) des Riemens (1) in einem Überlappungsbereich (4) flächig übereinanderliegen und miteinander verbunden sind zum Ausbilden eines durch die mindestens eine Gewebelage (2) verstärkten endlosen Riemens (1), wobei die Endbereiche (1a, 1b) des Riemens (1) durch mindestens einen eine Naht (9) ausbildenden Faden (7) miteinander verbunden sind, wobei der mindestens eine Faden (7) die Endbereiche (1a, 1b) des Riemens (1) dazu in einem Nahtbereich (6) in mehreren Stichen (8) durchdringt, wobei die mindestens eine Gewebelage (2) des Riemens (1) zumindest über diesen Nahtbereich (6) in die Polymerschicht (3) eingebettet ist, und der Faden (7) in Übergangsbereichen (20) zwischen den Stichen (8) in die Polymerschicht (3) derartig oberflächlich in einer Eindringtiefe (T) eingebettet ist, dass der Faden (7) unterhalb von Oberflächen (10a, 10b) des Riemens (1) verläuft,
**dadurch gekennzeichnet, dass** zusätzlich eine Haltenaht (25) vorgesehen ist, die im Nahtbereich (6) im Wesentlichen quer zu einer Längsrichtung (L) des Riemens (1) verläuft.

2. Riemen (1) nach Anspruch 1, **dadurch gekennzeichnet, dass** der Riemen (1) zumindest bereichsweise oberflächlich strukturiert ist, insbesondere in dem Nahtbereich (6) und/oder in dem Überlappungsbereich (4).

3. Riemen (1) nach Anspruch 1 oder 2, **dadurch gekennzeichnet, dass** die Polymerschicht (3) über den gesamten Riemen (1) oder im Wesentlichen nur über den Nahtbereich (6) ausgedehnt ist.

4. Riemen (1) nach einem der vorhergehenden Ansprüche, **dadurch gekennzeichnet, dass** der Faden (7) in den Übergangsbereichen (20) zwischen den Stichen (8)
- in einer von der Oberfläche (10a, 10b) des Riemens (1) in einer Eindringtiefe (T) verlaufenden Vertiefung (21) angeordnet ist, wobei die Vertiefung (21) zumindest bereichsweise durch Aufbringen einer Fadenspannung auf den Faden (7), insbesondere in einem Nähvorgang und/oder im Betrieb des Riemens (1), einbringbar ist oder die Vertiefung (21) bereits vorab in die Oberfläche (10a, 10b) des Riemens (1) eingebracht ist, oder
- unter der Oberfläche (10a, 10b) des Riemens (1) in der Eindringtiefe (T) vollständig von der Polymerschicht (3) bedeckt ist.

5. Riemen (1) nach einem der vorhergehenden Ansprüche, **dadurch gekennzeichnet, dass** zwischen der Gewebelage (2) und den Übergangsbereichen (20) des Fadens (7) zumindest ein Teil der Polymerschicht (3) oder eine andere polymere Beschichtung angeordnet ist.

6. Riemen (1) nach einem der vorhergehenden Ansprüche, **dadurch gekennzeichnet, dass** ein Großteil der Übergangsbereiche (20) zwischen den Stichen (8) eine Richtungs-Komponente (x) aufweist, die parallel zu einer Längsrichtung (L) des Riemens (1) ausgerichtet ist.

7. Riemen (1) nach Anspruch 6, **dadurch gekennzeichnet, dass** ein Winkel (α) zwischen der Längsrichtung (L) des Riemens (1) und einem Großteil der Übergangsbereiche (20) betragsmäßig zwischen 5° und 60°, vorzugsweise zwischen 5° und 45°, liegt.

8. Riemen (1) nach einem der vorhergehenden Ansprüche, **dadurch gekennzeichnet, dass** die durch den mindestens einen Faden (7) ausgebildete Naht (9) einen Zickzack-Verlauf (22a) und/oder einen wellenförmigen Verlauf (22b) und/oder einen Rechteck-Verlauf (22c) aufweisen.

9. Riemen (1) nach einem der vorhergehenden Ansprüche, **dadurch gekennzeichnet, dass** eine Hauptrichtungskomponente der zusätzlichen Haltenaht (25) im Nahtbereich (6) in einem Winkel von mehr als 45° zur Längsrichtung (L) des Riemens (1), vorzugsweise in etwa 60° zur Längsrichtung (L) des Riemens (1), verläuft.

10. Riemen (1) nach einem der vorhergehenden Ansprüche, **dadurch gekennzeichnet, dass** der Nahtbereich (6) über den Überlappungsbereich (4) zumindest einseitig hinausgeht, so dass auch Stiche (8) und Übergangsbereiche (20) des Fadens (7) außerhalb des Überlappungsbereiches (4) angeordnet sind zum Andrücken von Riemenenden (11a, 11b) des Riemens (1) an die Oberfläche (10a, 10b) des Riemens (1).

11. Riemen (1) nach einem der vorhergehenden Ansprüche, **dadurch gekennzeichnet, dass** die mindestens eine Gewebelage (2) eine Doppeltuch-Struktur aufweist und/oder die mindestens eine Gewebelage (2) als SZ-Gewebe ausgeführt ist, wobei die mindestens eine Gewebelage (2) in Kreuzungspunkten (24) von dem Faden (7) durchstoßen wird.

12. Riemen (1) nach einem der vorhergehenden Ansprüche, **dadurch gekennzeichnet, dass** zwischen den Endbereichen (1a, 1b) des Riemens (1) zusätzlich eine stoffschlüssige Verbindung ausgebildet ist und/oder zwischen den Endbereichen (1a, 1b) des Riemens (1) eine zusätzliche unvernetzte oder vernetzte Polymerschicht angeordnet ist.

13. Riemen (1) nach einem der vorhergehenden Ansprüche, **dadurch gekennzeichnet, dass** die Endbereiche (1a, 1b) des Riemens (1) gegensätzlich abgestuft sind zum Minimieren eines Überstandes (17) zwischen den Endbereichen (1a, 1b), wobei dazu eine innen liegende äußere Decklage (3a) der Polymerschicht (3) im jeweiligen Endbereich (1a, 1b) unter Ausbildung jeweils einer Stufe (5a, 5b) zumindest teilweise abgetragen ist und die gegensätzlich abgestuften Endbereiche (1a, 1b) im Überlappungsbereich (4) flächig aufeinanderliegen, um den endlosen Riemen (1) auszubilden.

14. Verfahren zum Herstellen eines Riemens (1), insbesondere nach einem der vorhergehenden Ansprüche, mit mindestens den folgenden Schritten:
- Bereitstellen eines offenen Riemens (1) mit mindestens einer Gewebelage (2), die zumindest bereichsweise in eine Polymerschicht (3) eingebettet ist (St1);
- flächiges Aufeinanderlegen von Endbereichen (1a, 1b) des Riemens (1) derartig, dass sich die Endbereiche (1a, 1b) in einem Überlappungsbereich (4) überlappen (St2);
- Verbinden der Endbereiche (1a, 1b) des Riemens (1) zum Ausbilden eines endlosen Riemens (1),
wobei die Endbereiche (1a, 1b) des Riemens (1) durch mindestens einen Faden (7) miteinander verbunden werden, wobei der mindestens eine Faden (7) dazu in einem Nahtbereich (6) unter Ausbildung einer Naht (9) in mehreren Stichen (8) durch die Endbereiche (1a, 1b) des Riemens (1) gestoßen wird, wobei die mindestens eine Gewebelage (2) des Riemens (1) zumindest nach dem Ausbilden der Naht (9) zumindest über diesen Nahtbereich (6) in die Polymerschicht (3) eingebettet ist, so dass der Faden (7) beim oder zumindest nach dem Verbinden in Übergangsbereichen (20) zwischen den Stichen (8) in die Polymerschicht (3) derartig oberflächlich in einer Eindringtiefe (T) eingebettet wird, dass der Faden (7) unterhalb von Oberflächen (10a, 10b) des Riemens (1) verläuft,
**dadurch gekennzeichnet, dass**
zusätzlich eine Haltenaht (25) eingebracht wird, die im Nahtbereich (6) im Wesentlichen quer zu einer Längsrichtung (L) des Riemens (1) verläuft.

15. Verfahren nach Anspruch 14, **dadurch gekennzeichnet, dass** die Polymerschicht (3) beim Bereitstellen des offenen Riemens (1) bereits vernetzt ist oder die Polymerschicht (3) nach dem Verbinden der Endbereiche mit dem Faden (7) vernetzt wird (St4).

16. Verfahren nach Anspruch 14 oder 15, **dadurch gekennzeichnet, dass** der Riemen (1) vor dem flächigen Aufeinanderlegen der Endbereiche (20) in den Endbereichen (1a, 1b) abgestuft wird und/oder der Riemen (1) vor dem Verbinden der Endbereiche (1a, 1b) mit dem Faden (7) zumindest im Nahtbereich (6) oberflächlich strukturiert wird (StZ).

17. Verfahren nach einem der Ansprüche 14 bis 16, **dadurch gekennzeichnet, dass**
- nach dem Ausbilden der Naht (9) eine weitere, die Oberflächen (10a, 10b) des Riemens (1) zumindest im Nahtbereich (6) überdeckende Polymerschicht aufgebracht und vernetzt wird zum zusätzlichen Schützen des Fadens (7) und/oder
- eine außen liegende äußere Decklage (3b) der Polymerschicht (3) im jeweiligen Endbereich (1a, 1b) und/oder im Nahtbereich (6) vor dem Ausbilden der Naht (9) zumindest teilweise abgetragen wird und nach dem Ausbilden der Naht (9) eine weitere, die Oberflächen (10a, 10b) des Riemens (1) zumindest im Nahtbereich (6) überdeckende Polymerschicht als außen liegende äußere Decklage (3b) wieder aufgebracht und vernetzt wird zum zusätzlichen Schützen des Fadens (7).

## Claims

1. Belt (1) as a continuous traction mechanism, in particular for conveyor belts of agricultural machines, in particular balers, with at least one fabric layer (2), which at least in regions is embedded in a polymer layer (3), wherein end regions (1a, 1b) of the belt (1) lie flat on top of one another in an overlap region (4) and are connected to each other to form a continuous belt (1) reinforced by the at least one fabric layer (2), wherein the end regions (1a, 1b) of the belt (1) are connected to each other by at least one thread (7) forming a seam (9), wherein the at least one thread (7), the end regions (1a, 1b) of the belt (1) penetrate, to this end, in a seam region (6) in a plurality stitches (8), wherein the at least one fabric layer (2) of the belt (1) is embedded in the polymer layer (3) at least across this seam region (6) and the thread (7) in transition regions (20) between the stitches (8) is embedded in the polymer layer (3) close to a surface at a pre-determined depth of penetration (T) such that the thread (7) runs below surfaces (10a, 10b) of the belt (1), **characterised in that** a holding seam (25) is also provided which runs in the seam region (6) substantially transversally to a longitudinal direction (L) of the belt (1).

2. Belt (1) according to claim 1, **characterised in that** the belt (1) is structured at least in regions on the surface, in particular in the seam region (6) and/or in the overlap region (4).

3. Belt (1) according to claim 1 or 2, **characterised in that** the polymer layer (3) extends across the entire belt (1) or substantially only across the seam region (6).

4. Belt (1) according to any one of the preceding claims, **characterised in that** the thread (7) in the transition regions (20) between the stitches (8) is arranged
- in a recess (21) extending at a pre-determined depth of penetration (T) from the surface (10a, 10b) of the belt (1), wherein the recess (21) can be introduced, at least in regions, by applying a thread tension on the thread (7), in particular during a sewing process and/or during operation of the belt (1) or the recess (21) is already introduced beforehand in the surface (10a, 10b) of the belt (1), or
- is completely covered by the polymer layer (3) below the surface (10a, 10b) of the belt (1) at the pre-determined depth of penetration (T).

5. Belt (1) according to any one of the preceding claims, **characterised in that** at least one part of the polymer layer (3) or another polymer coating is arranged between the fabric layer (2) and the transition regions (20) of the thread (7).

6. Belt (1) according to any one of the preceding claims, **characterised in that** a majority of the transition regions (20) has a direction component (x) between the stitches (8), which is aligned parallel to a longitudinal direction (L) of the belt (1).

7. Belt (1) according to claim 6, **characterised in that** the value of an angle (α) between the longitudinal direction (L) of the belt (1) and a majority of the transition regions (20) is between 5° and 60°, preferably between 5° and 45°.

8. Belt (1) according to any one of the preceding claims, **characterised in that** the seam (9) formed by the at least one thread (7) has a zigzag path (22a) and/or a wave-shaped path (22b) and/or rectangular path (22c).

9. Belt (1) according to any one of the preceding claims, **characterised in that** a main direction component of the additional holding seam (25) in the seam region (6) runs at an angle of more than 45° to the longitudinal direction (L) of the belt (1), preferably roughly 60° to the longitudinal direction (L) of the belt (1).

10. Belt (1) according to any one of the preceding claims, **characterised in that** the seam region (6) goes beyond, at least on one side, the overlap region (4) such that stitches (8) and transition regions (20) of the thread (7) are also arranged outside of the overlap region (4) to press belt ends (11a, 11b) of the belt (1) on the surface (10a, 10b) of the belt (1).

11. Belt (1) according to any one of the preceding claims, **characterised in that** the at least one fabric layer (2) has a double fabric structure and/or the at least one fabric layer (2) is designed as a SZ fabric, wherein the at least one fabric layer (2) is penetrated by the thread (7) at certain intersection points (24).

12. Belt (1) according to any one of the preceding claims, **characterised in that** a materially-bonded connection is also formed between the end regions (1a, 1b) of the belt (1) and/or an additional non-cross-linked or cross-linked polymer layer is arranged between the end regions (1a, 1b) of the belt (1).

13. Belt (1) according to any one of the preceding claims, **characterised in that** the end regions (1a, 1b) of the belt (1) are graded in an opposing manner to minimise any overhang (17) between the end regions (1a, 1b), wherein, to this end, an inside facing outer cover layer (3a) of the polymer layer (3) is at least partially removed in the respective end region (1a, 1b) thereby forming a step (5a, 5b) in each case, and the opposingly graded end regions (1a, 1b) lie flat on top of one another in the overlap region (4) to form the continuous belt (1).

14. Method for manufacturing a belt (1), in particular according to any one of the preceding claims, with at least the following steps:
- providing an open belt (1) with at least one fabric layer (2), which is embedded at least in regions in a polymer layer (3) (St1);
- lying end regions (1a, 1b) of the belt (1) flat on top of one another such that the end regions (1a, 1b) overlap in an overlap region (4) (St2);
- connecting the end regions (1a, 1b) of the belt (1) to form a continuous belt (1), wherein the end regions (1a, 1b) of the belt (1) are connected to each other by at least one thread (7), wherein the at least one thread (7) is, to this end, pushed in a seam region (6) thereby forming a seam (9) in a plurality of stitches (8) through the end regions (1a, 1b) of the belt (1), wherein the at least one fabric layer (2) of the belt (1) is embedded at least after forming the seam (9) at least across this seam region (6) in the polymer layer (3) such that the thread (7) is embedded in the polymer layer (3) on the surface at a depth of penetration (T) during or at least after connecting in transition regions (20) between the stitches (8) such that the thread (7) runs below surfaces (10a, 10b) of the belt (1), **characterised in that** a holding seam (25) is also introduced which runs in the seam region (6) substantially transversally to a longitudinal direction (L) of the belt (1).

15. Method according to claim 14, **characterised in that** the polymer layer (3) is already cross-linked when providing the open belt (1) or the polymer layer (3) is cross-linked after connecting the end regions to the thread (7) (St4).

16. Method according to claim 14 or 15, **characterised in that** the belt (1) is graded in the end regions (1a, 1b) prior to lying the end regions (20) flat on top of one another and/or the belt (1) is structured on the surface at least in the seam region (6) prior to connecting the end regions (1a, 1b) with the thread (7) (StZ).

17. Method according to any one of claims 14 to 16, **characterised in that**
- after forming the seam (9) a further polymer layer covering the surfaces (10a, 10b) of the belt (1) at least in the seam region (6) is applied and is cross-linked to additionally protect the thread (7) and/or
- an outside facing outer cover layer (3b) of the polymer layer (3) is at least partially removed in the respective end region (1a, 1b) and/or in the seam region (6) prior to forming the seam (9) and after forming the seam (9) a further polymer layer covering the surfaces (10a, 10b) of the belt (1) at least in the seam region (6) is re-applied and is cross-linked to additionally protect the thread (7).

## Revendications

1. Courroie (1) servant de moyen de traction sans fin, en particulier pour des bandes de transport de machines agricoles, en particulier de presses à botteler, avec au moins une couche tissée (2), dont au moins certaines zones sont noyées dans une couche polymère (3), des parties d'extrémité (1a, 1b) de la courroie (1) étant superposées à plat dans une zone de chevauchement et reliées entre elles pour former une courroie sans fin (1) renforcée par l'au moins une couche tissée (2), les parties d'extrémité (1a, 1b) de la courroie étant reliées entre elles par au moins un fil (7) formant une couture (9), l'au moins un fil (7) perforant à cet effet les parties d'extrémité (1a, 1b) de la courroie (1) en plusieurs points (8) dans une zone de couture (6), l'au moins couche tissée (2) de la courroie (1) étant noyée dans la couche polymère (3) au moins sur cette zone de couture (6) et le fil (7) étant dans des zones de transition (20) noyé en surface entre les points (8) dans la couche polymère (3), dans une profondeur de pénétration (T) de manière que le fil (7) s'étend au-dessous de surfaces (10a, 10b) de la courroie (1),
**caractérisée en ce que**
une couture de maintien (25) est prévue en plus, couture de maintien qui s'étend dans la zone de couture (6) essentiellement transversalement à une direction longitudinale (L) de la courroie (1).

2. Courroie (1) suivant la revendication 1, **caractérisée en ce que** la courroie (1) présente une surface structurée au moins dans certaines zones, en particulier dans la zone de couture (6) et/ou dans la zone de chevauchement (4).

3. Courroie (1) suivant la revendication 1 ou 2, **caractérisée en ce que** la couche polymère (3) s'étend sur toute la courroie (1) ou essentiellement uniquement sur la zone de couture (6).

4. Courroie (1) suivant une des revendications précédentes, **caractérisée en ce que** dans les zones de transition (20), entre les points (8), le fil (7)
- est disposé dans un évidement (21) s'étendant depuis la surface (10a, 10b) de la courroie (1) dans une profondeur de pénétration (T), l'évidement pouvant être réalisé au moins dans certaines zones en appliquant au fil (7) une tension de fil, en particulier lors d'une opération de couture et/ou en service de la courroie (1) ou en l'incorporant à l'avance dans la surface (10a, 10b) de la courroie (1) ou
- en le recouvrant entièrement par la couche polymère (3) dans la profondeur de pénétration (T) sous la surface (10a, 10b) de la courroie (1).

5. Courroie (1) suivant une des revendications précédentes, **caractérisée en ce qu'**au moins une partie de la couche polymère (3) ou un autre revêtement polymère est disposé entre la couche tissée (2) et les zones de transition (20) du fil (7).

6. Courroie (1) suivant une des revendications précédentes, **caractérisée en ce qu**'une grande partie des zones de transition (20) entre les points (8) présente une composante directionnelle (x) qui est orientée parallèlement à une direction longitudinale (L) de la courroie (1).

7. Courroie (1) suivant la revendication 6, **caractérisée en ce qu**'en degrés, un angle (a) formé entre la direction longitudinale (L) de la courroie (1) et une grande partie des zones de transition (20) est comprise entre 5° et 60°, de préférence entre 5° et 45°.

8. Courroie (1) suivant une des revendications précédentes, **caractérisée en ce que** la couture (9) réalisée par l'au moins un fil (7) présente une forme en zigzags (22a) et/ou une forme en ondulations (22b) et/ou une forme carrée.

9. Courroie (1) suivant une des revendications précédentes, **caractérisée** en ce **qu**'une composante directionnelle principale de la couture de maintien supplémentaire (25) dans la zone de couture (6) s'étend de manière à former un angle de plus de 45° par rapport à la direction longitudinale (L) de la courroie (1), de préférence de 60° par rapport à la direction longitudinale (L) de la courroie (1).

10. Courroie (1) suivant une des revendications précédentes, **caractérisée en ce que** la zone de couture (6) dépasse au moins d'un côté la zone de chevauchement (4), de sorte que des points (8) et des zones de transition (20) du fil (7) sont également disposés à l'extérieur de la zone de chevauchement (4) pour presser des extrémités de courroie (11a, 11b) de la courroie (1) contre la surface de celle-ci (1).

11. Courroie (1) suivant une des revendications précédentes, **caractérisée en ce que** l'au moins une couche tissée (2) présente une structure de tissu double et/ou l'au moins une couche tissée (2) est conçue comme tissu SZ, l'au moins une couche tissée (2) étant traversée par le fil (7) en des points d'intersection (24).

12. Courroie (1) suivant une des revendications précédentes, **caractérisée en ce qu**'entre les parties d'extrémité (1a, 1b) de la courroie (1) une liaison matérielle est conçue en plus et/ou entre les parties d'extrémité (1a, 1b) de la courroie (1) est disposée une couche polymère supplémentaire non réticulée ou réticulée.

13. Courroie (1) suivant une des revendications précédentes, **caractérisée en ce que** les parties d'extrémité (1a, 1b) de la courroie (1) sont étagées en sens contraire l'une par rapport à l'autre pour minimiser une projection (17) entre les parties d'extrémité (1a, 1b), une doublure extérieure (3a) située à l'intérieur de la couche polymère (3) étant, à cet effet, retirée au moins partiellement en formant respectivement un étage (5a, 5b) et les parties d'extrémité (1a, 1b) étagées en sens contraire l'une par rapport à l'autre sont superposées à plat dans la zone de chevauchement (4) pour réaliser la courroie sans fin (1).

14. Procédé de fabrication d'une courroie (1), en particulier suivant une des revendications précédentes, le procédé comportant au moins les étapes suivantes :
- mise à disposition d'une courroie ouverte (1) avec au moins une couche tissée (2) qui est au moins en parties noyée dans une couche polymère (3) (St1),
- superposition à plat de parties d'extrémité (1a, 1b) de la courroie (1) de sorte que les parties d'extrémité (1a, 1b) se chevauchent dans une zone de chevauchement (4), (St2)
- liaison des parties d'extrémité (1a, 1b) de la courroie (1) pour réaliser une courroie sans fin (1),
les parties d'extrémité (1a, 1b) de la courroie (1) étant reliées l'une à l'autre par au moins un fil (7), l'au moins un fil (7) étant, à cet effet, passé dans une zone de couture (6) en plusieurs points (8) à travers les parties d'extrémité (1a, 1b) de la courroie (1) en formant une couture (9), l'au moins une couche tissé (2) de la courroie (1) étant, après la réalisation de la couture (9), noyée au moins sur cette zone de couture (6) dans la couche polymère (3), de sorte que lors de la liaison ou au moins après la liaison, le fil (7) est, dans les zones de transition (20) entre les points (8) noyé en surface dans la couche polymère (3), à une profondeur de pénétration (T) de manière que le fil (7) s'étend au-dessous de surfaces (10a, 10b) de la courroie (1),
**caractérisé en ce que**
une couture de maintien (25) supplémentaire est apportée, qui s'étend dans la zone de couture (6) essentiellement transversalement à une direction longitudinale (L) de la courroie (1).

15. Procédé suivant la revendication 14, **caractérisé en ce que** la couche polymère (3) est déjà réticulée lors de la mise à disposition de la courroie (1) ouverte ou la couche polymère (3) est réticulée après la liaison des parties d'extrémité par le fil (7), (St4).

16. Procédé suivant la revendication 14 ou 15, **caractérisé en ce que** la courroie (1) est étagée au niveau des parties d'extrémité (1a, 1b) préalablement à la superposition à plat des parties d'extrémités (20) et/ou la courroie (1) est structurée en surface par le fil (7) au moins dans la zone de couture (6), (StZ).

17. Procédé suivant une des revendications 14 à 16, **caractérisé en ce que**
- après la réalisation de la couture (9), une couche polymère supplémentaire, qui recouvre les surfaces (10a, 10b) de la courroie (1) au moins dans la zone de couture (6), est appliquée et réticulée pour une protection supplémentaire du fil (7) et/ou
- une doublure externe (3b), située à l'extérieur, de la couche polymère (3) est retirée au moins partiellement dans la partie d'extrémité respective (1a, 1b) et/ou dans la zone de couture (6) préalablement à la réalisation de la couture (9) et après la réalisation de la couture (9), une autre couche polymère, qui recouvre les surfaces (10a, 10b) de la courroie (1) au moins dans la zone de couture (6), est à nouveau appliquée et réticulée comme doublure externe située à l'extérieur (3b) pour une protection supplémentaire du fil (7).
